# FASCICULE DE BREVET EUROPEEN

(11) **EP 3 374 064 B1**
(45) Date de publication et mention de la délivrance du brevet: **29.07.2020**
(21) Numéro de dépôt: 16784199.8
(22) Date de dépôt: 20.10.2016
(51) Int. Cl.: B01D 53/90, B01J 13/00, B01D 53/94, F01N 3/20, F01N 3/029

(54) **FLUIDE POUR LA DEPOLLUTION DE MOTEURS THERMIQUES UTILISANT DES SUSPENSIONS STABLES DE PARTICULES COLLOÏDALES METALLIQUES ET MODES DE PREPARATION DUDIT FLUIDE**
FLÜSSIGKEIT ZUR REINIGUNG VON WÄRMEKRAFTMASCHINEN MIT STABILEN SUSPENSIONEN VON KOLLOIDALEN METALLTEILCHEN UND VERFAHREN ZUR HERSTELLUNG DIESER FLÜSSIGKEIT
FLUID FOR PURIFYING HEAT ENGINES USING STABLE SUSPENSIONS OF METAL COLLOIDAL PARTICLES AND METHODS FOR PREPARING SAID FLUID

(30) Priorité: 13.11.2015 FR 1560906
(43) Date de publication de la demande: 19.09.2018
(73) Titulaire: IFP Energies nouvelles, 92500 Rueil-Malmaison (FR)
(72) Inventeur: GATEAU, Patrick, 78310 Maurepas (FR); PALAZZO, Nathalie, 78500 Sartrouville (FR); LECOLIER, Eric, 92370 Chaville (FR); ZINOLA, Stéphane, 69330 Charly (FR)
(74) Mandataire: IFP Energies nouvelles
(86) Numéro de dépôt international: PCT/EP2016/075198
(87) Numéro de publication internationale: WO 2017/080779

(56) Documents cités:
- EP-A2- 2 541 012
- WO-A2-2014/142661
- FR-A1- 2 885 308
- US-A- 6 051 040
- US-A1- 2007 101 659

## Description

### DOMAINE DE L'INVENTION

La présente invention décrit un fluide unique pour la dépollution automobile, permettant d'effectuer deux opérations distinctes : la réduction catalytique sélective des NOx en utilisant la technologie de Réduction Catalytique Sélective, couramment désignée par son nom anglais Selective Catalytic Réduction, ou par l'acronyme SCR, ainsi que l'aide à la régénération du filtre à particules (FAP), cette aide à la régénération pouvant se manifester soit par la promotion de la régénération en continue du filtre à particules, soit par l'accélération de la combustion des suies lors des phases de régénération actives du FAP, soit par une combinaison de ces deux avantages. La composition selon l'invention est homogène et présente des caractéristiques de stabilité dans le temps, ou lors de variations de la température ou de pH. La présente invention décrit différents modes d'obtention du fluide ainsi que le mode d'utilisation de ce fluide.

### ART ANTERIEUR

Différentes technologies sont mises en œuvre pour diminuer les émissions nocives des gaz d'échappement issus des moteurs thermiques Diesel, notamment les oxydes d'azote (NOx) et les particules.

Un exemple de ligne d'échappement intégrant le système de traitement deNOx par réduction catalytique sélective, (notée SCR abréviation de Selective Catalytic Reduction dans la terminologie anglo saxonne), et le filtre à particules (en abrégé FAP), est donné dans le brevet FR 2947004. Ces deux systèmes de dépollution peuvent également être regroupés dans un seul module, celui-ci étant connu sous le terme de SCR sur filtre ou SCRF ou SDPF ou SCRoF.

Nous n'avons pas trouvé dans la littérature une composition de fluide permettant de cumuler les fonctions de réduction des oxydes d'azote et d'aide à la régénération des particules de suies piégées.

Le document WO 2014/142661 décrit un procédé de préparation d'un fluide sous la forme d'une suspension stable comprenant des particules colloïdales d'un oxyde métallique de cérium dispersées dans une solution aqueuse contenant un réducteur (NH4NO3; acide 2-(2-méthoxyéthoxy) acétique).

Le document EP 2541012 divulgue un procédé pour la dépollution de moteurs de combustion internes permettant d'effectuer à la fois la réduction catalytique sélective des oxydes d'azote contenus dans les gaz d'échappement, ainsi que l'aide à la régénération du filtre à particules par combustion catalytique des particules de suies déposées dans le filtre à particules. Ce document décrit notamment une solution aqueuse d'un composé réducteur des NOx (NH3/urée) et un composé de captage d'oxygène à base de cérium ou fer.

L'AdBlue® (ou AUS32 ou DEF ou ARLA32) est une solution d'urée à 32,5 % en masse dans de l'eau pure, qui est utilisée pour la réduction sélective des oxydes d'azote dans le cadre de la technologie SCR pour les applications routières et non routières.

Le concept général de mutualisation de ces fonctions de dépollution a fait l'objet, fin 2014, du dépôt de la demande de brevet français 14/62.228. On peut considérer la présente demande comme un perfectionnement de la demande 14/62.228

### DESCRIPTION SOMMAIRE DE L'INVENTION

La présente invention décrit un fluide pour la dépollution de moteurs thermiques notamment Diesel, permettant d'effectuer à la fois la réduction catalytique sélective des oxydes d'azote contenus dans les gaz d'échappement (fonction dite SCR), ainsi que l'aide à la régénération du filtre à particules (FAP) par combustion catalytique des particules de suies déposées dans le filtre à particules (fonction dite d'aide à la régénération du FAP), cette aide à la régénération pouvant se manifester soit par la promotion de la régénération en continue du filtre à particules, soit par l'accélération de la combustion des suies lors des phases de régénération actives du FAP, soit par une combinaison de ces deux avantages.

L'utilisation du catalyseur d'oxydation des suies diffère de l'art antérieur précédemment cité en ce qu'il est injecté directement à l'échappement ne passant ainsi pas par la chambre de combustion du moteur. L'injection du fluide selon l'invention est déclenchée par le calculateur moteur pour répondre à un besoin de disposer de la quantité nécessaire d'ammoniac sur le catalyseur SCR pour opérer la réduction efficace des NOx. Les injections sont réalisées de manière régulière, selon une période typiquement comprise entre quelques millisecondes et quelques dizaines de secondes dépendant des conditions de fonctionnement du moteur, ce qui permet de favoriser un mélange homogène du catalyseur avec les suies et d'assurer un contact intime entre les suies et le catalyseur.

In fine le fait d'injecter le fluide selon l'invention permet soit de favoriser le phénomène de régénération en continue du filtre à particules et d'espacer ainsi les périodes de régénération actives du FAP, soit d'accélérer la combustion de la suie lors des phases de régénération actives du FAP, permettant de limiter la consommation de carburant relative à cette phase et/ou de maximiser les chances de brûler une masse de suie importante lorsque les conditions de températures et de composition gazeuse à l'échappement sont favorables à cette régénération active, soit une combinaison de ces deux avantages.

Le fluide selon l'invention se présente sous la forme d'une suspension stable de particules colloïdales incorporant un ou des éléments atomiques connus pour catalyser la combustion des suies, ces particules colloïdales étant dispersées dans une solution aqueuse contenant 32,5% massique d'urée. Les particules colloïdales utilisées suivant l'invention contiennent au moins l'un des métaux suivants : Fe, Cu, Ni, Co, Zn, Mn, Ti, V, Sr, Pt, Ce, Ca, Li, Na, Nb.

Les particules colloïdales peuvent être soit des particules d'oxydes ou d'oxyhydroxydes métalliques soit des carbonates métalliques soit une combinaison des deux.

Les compositions du fluide selon l'invention sont constituées d'une dispersion de particules colloïdales d'oxydes ou d'oxyhydroxydes métalliques ou de carbonates métalliques dans la solution aqueuse d'urée, le ou les métaux des oxydes ou oxyhydroxydes métalliques ou des carbonates métalliques étant choisis dans la liste de métaux suivants : Fe, Cu, Ni, Co, Zn, Mn, Ti, V, Sr, Pt, Ce, Ca, Li, Na, Nb. De manière préférée, le ou les métaux du ou des oxydes ou oxyhydroxydes métalliques ou des carbonates métalliques sont choisis dans la liste suivante : Fe, Ce, Cu, Sr.

De manière préférée, la concentration en oxydes ou oxyhydroxydes métalliques ou de carbonates métalliques est telle que la concentration en ions métalliques dans la solution du composé réducteur ou précurseur d'un agent réducteur est comprise entre 10 et 10000 ppm, de préférence entre 10 et 5000 ppm, et d'une manière préférée entre 10 et 2000 ppm.

Selon une variante préférée de l'invention, la dispersion de particules colloïdales est constituée d'oxydes ou d'oxyhydroxydes ou de carbonates de fer d'origine minérale ou synthétique.

Selon une variante de l'invention, les oxydes de fer pris seul ou en mélange, sont choisis dans la liste suivante : la wustite FeO, l'hématite α-Fe₂O₃, la maghémite γ-Fe₂O₃, la magnétite. Selon une autre variante de l'invention, les oxyhydroxydes de fer pris seul ou en mélange, sont choisis dans la liste suivante : la goethite α-FeO(OH), la lépidocrocite γ-FeO(OH), la feroxyhyte δ-FeO(OH), l'akaganéite β-FeO(OH), la ferrihydrite Fe₅O₈·4H₂O, la bernalite Fe(OH)₃, l'hydroxyde ferreux Fe(OH).

Selon une autre variante préférée de l'invention, la dispersion de particules colloïdales est constituée d'oxydes ou d'hydroxydes ou de carbonates de cuivre d'origine minérale ou synthétique.

Selon une autre variante préférée de l'invention, la dispersion de particules colloïdales est constituée d'oxydes ou d'oxyhydroxydes ou de carbonates de cérium d'origine minérale ou synthétique.

Selon une autre variante préférée de l'invention, la dispersion de particules colloïdales est constituée d'oxydes ou d'oxyhydroxydes ou de carbonates de strontium d'origine minérale ou synthétique.

Selon une autre variante de l'invention, l'agent réducteur ou le précurseur d'agent réducteur est de l'urée à 32,5 ± 0,7% massique en solution dans de l'eau déminéralisée ou de l'eau pure répondant aux spécifications de la norme ISO 22241.

Selon une variante très préférée de la présente invention, la solution contenant le ou les composés réducteurs ou le ou les précurseurs d'un agent réducteur du composé réducteur est préparée à partir d'un produit répondant aux spécifications de la norme ISO 22241, par exemple les produits commerciaux AdBlue®, DEF, AUS32 ou ARLA32.

Selon une autre variante préférée de la présente invention, la solution contenant le ou les composés réducteurs ou le ou les précurseurs d'un agent réducteur est préparée à partir d'un produit respectant les caractéristiques physiques et chimiques de la norme ISO 22241-1, par exemple le produit commercial Diaxol®.

Par la suite, le terme Adblue® sera utilisé pour désigner indifféremment les produits suivants : Adblue®, DEF, AUS32, ARLA32 ou Diaxol®.

La présente invention concerne également un procédé de fabrication du fluide pour la dépollution moteur selon la revendication 1.

Le procédé de fabrication consiste à disperser des particules colloïdales incorporant au moins un métal dans une solution aqueuse contenant au moins un réducteur ou au moins un précurseur d'un agent réducteur des NOx.

Lorsque le matériau dont sont constituées les particules colloïdales présente un point iso-électrique soit supérieur à 12 soit inférieur à 7, les particules peuvent être directement dispersées dans une solution aqueuse dont le pH est compris entre 9 et 10 et contenant au moins un réducteur ou au moins un précurseur d'agent réducteur des NOx. Dans ce cas une étape dite de fonctionnalisation des particules n'est pas *a priori* nécessaire. Dans ce cas les particules colloïdales peuvent être directement dispersées dans une solution d'AdBlue®, la suspension de particules colloïdales ainsi obtenue étant stable vis-à-vis de l'agrégation et de la sédimentation.

Dans le cas où le point iso-électrique du matériau dont sont constituées les particules colloïdales est compris dans l'intervalle 7 à 12, alors une étape de fonctionnalisation desdites particules est toujours nécessaire.

Dans le cas général, le procédé de fabrication du fluide pour la dépollution moteur selon la présente invention consiste en la suite d'étapes suivantes :
- a) synthèse des particules d'oxydes ou d'oxyhydroxydes ou de carbonates métalliques,
- b) fonctionnalisation des particules d'oxydes ou d'oxyhydroxydes ou de carbonates métalliques par des molécules organiques ou par enrobage pour stabiliser ces particules dans la solution aqueuse contenant un agent réducteur ou précurseur d'un agent réducteur des NOx,
- c) purification par filtration, ou filtration-lavage, ou rinçage, ou dialyse, procédés appliqués seuls ou en combinaison, des suspensions de particules d'oxydes ou d'oxyhydroxydes ou de carbonates métalliques,
- d) dispersion des particules d'oxydes ou d'oxyhydroxydes ou de carbonates métalliques fonctionnalisées dans une solution aqueuse contenant au moins un agent réducteur ou au moins un précurseur d'agent réducteur des NOx suivant l'un des modes ci-dessous :
   o agitation mécanique à l'aide d'un agitateur équipé soit d'une tige à hélices comprenant un certain nombre de pales, soit de tout autre équipement connu pour assurer une agitation efficace de la suspension,
   o agitation avec un homogénéiseur-disperseur à haut cisaillement o agitation avec un broyeur colloïdal
- e) dispersion à l'aide d'une sonde à ultra-sons

L'étape e) est soit réalisée en fonction du résultat et de l'efficacité obtenus à l'issue de l'étape de dispersion mécanique de l'étape d) (dans ce cas cette étape e) est optionnelle), soit réalisée à la place de l'étape d'agitation mécanique de l'étape d).

Selon une variante du procédé de fabrication du fluide pour la dépollution moteur selon l'invention, l'étape b) de fonctionnalisation des particules d'oxydes ou d'oxyhydroxydes ou de carbonates métalliques est réalisée en utilisant des molécules organiques de type polymères ioniques portant au moins l'un des groupes chimiques suivants : amine, carboxylate, phosphate, sulfate, sulfonate, ou de type polymères non ioniques : polyoxyéthylènes, sucres, polysaccharides, dextran, amidon.

Selon une autre variante du procédé de fabrication du fluide pour la dépollution moteur selon l'invention, l'étape b) de fonctionnalisation des particules d'oxydes ou d'oxyhydroxydes ou de carbonates métalliques est réalisée en utilisant des molécules organiques choisies dans la liste suivante : acide citrique, citrate de trisodium, acide gluconique, acide dimercaptosuccinique, phosphocholine, sel de sodium de l'acide 4,5-dihydroxy-1,3-benzène disulfonique (Tiron), polysulfobétaïne, poly(méthacrylate de sulfobétaïne), poly(méthacrylamide de sulfobétaïne), dextran, dextran carboxyméthylé, alginate, chitosane, alcool polyvinylique (PVA), polyvinylpyrrolidone, polyéthylène glycol, poly(acide acrylique), polyacrylate de sodium, poly(acide méthacrylique), polyméthacrylate de sodium, polyméthacrylamide, polyacrylamide, ethylcellulose, poly(oxyde d'éthylène), polyéthylèneimine, polycoprolactone.

Selon une autre variante du procédé de fabrication du fluide pour la dépollution moteur selon l'invention, l'étape b) de fonctionnalisation des particules d'oxydes ou d'oxyhydroxydes ou de carbonates métalliques est réalisée en utilisant des molécules de type tensio-actif choisies dans la liste suivante : ammonium quaternaire, hydroxyde de tétraméthylammonium, hydroxyde de tétraéthylammonium, hydroxyde de tétrapropylammonium, bromure de cétyltriméthylammonium, acide oléique, oléate de sodium, glycolipides, sophorolipides, sodium bis(2éthylhexyl) sulfosuccinate.

Selon une autre variante du procédé de fabrication du fluide pour la dépollution moteur selon l'invention, les étapes a) de synthèse des particules d'oxydes ou d'oxyhydroxydes ou de carbonates métalliques, et b) de fonctionnalisation des particules d'oxydes ou d'oxyhydroxydes ou de carbonates métalliques sont réalisées simultanément dans l'étape a'). Dans ce cas, la suite des étapes du procédé de fabrication devient la suivante :
- a') synthèse des particules d'oxydes ou d'oxyhydroxydes ou de carbonates métalliques et fonctionnalisation simultanées de ces particules,
- c) purification des suspensions de particules d'oxydes ou d'oxyhydroxydes ou de carbonates métalliques synthétisées, cette purification est réalisée par au moins l'un des procédés suivants, appliqués seuls ou en combinaison : filtration, filtration-lavage, rinçage, dialyse,
- d) dispersion des particules d'oxydes ou d'oxyhydroxydes ou de carbonates métalliques fonctionnalisées dans une solution aqueuse contenant au moins un agent réducteur ou au moins un précurseur d'agent réducteur des NOx suivant l'un des modes ci-dessous :
   ∘ agitation mécanique à l'aide d'un agitateur équipé soit d'une tige à hélices comprenant un certain nombre de pales, soit de tout autre équipement connu pour assurer une agitation efficace de la suspension,
   ∘ agitation avec un homogénéiseur-disperseur à haut cisaillement (comme, par exemple, un Ultra-Turrax™)
   ∘ agitation avec un broyeur colloïdal
- e) dispersion à l'aide d'une sonde à ultra-sons

L'étape e) est réalisée soit en fonction du résultat et de l'efficacité obtenus à l'issue de l'étape de dispersion mécanique de l'étape d) (dans ce cas cette étape e) est optionnelle), soit à la place de l'étape d'agitation mécanique de l'étape d).

Selon une autre variante du procédé de fabrication du fluide pour la dépollution moteur, l'étape b) de fonctionnalisation des particules d'oxydes ou d'oxyhydroxydes ou de carbonates métalliques est réalisé par enrobage, c'est-à-dire par dépôt d'une fine couche d'un matériau dont le point iso-électrique (PIE) est soit supérieur à 10,5 soit inférieur à 8, et préférentiellement soit supérieur à 12, soit inférieur à 7. Cet enrobage permet de stabiliser les particules d'oxydes ou d'oxyhydroxydes ou de carbonates métalliques dans la solution aqueuse contenant au moins un agent réducteur ou au moins un précurseur d'un agent réducteur des NOx.

Selon une variante particulière du procédé de fabrication du fluide pour la dépollution moteur, lorsque les particules métalliques sont des particules d'oxydes ou d'oxyhydroxydes ou de carbonates de fer, dans l'étape de fonctionnalisation, on enrobe les particules d'oxydes de fer par une fine couche de silice, ou une fine couche de gadolinium, ou une fine couche d'or, ou de tout autre oxyde métallique dont le PIE est soit supérieur à 10,5 soit inférieur à 8, et préférentiellement soit supérieur à 12, soit inférieur à 7.

L'étape a) de synthèse des particules d'oxydes de fer, peut être réalisée par des méthodes « physiques » qui consistent en des synthèses sous vide (méthode de condensation de vapeur, méthode d'évaporation thermique,...) ou chimiques qui concernent des synthèses en milieux liquides. Préférentiellement, les particules d'oxydes de fer sont synthétisées par voie chimique : coprécipitation de sels de fer, voie sol-gel, voie sonochimique, synthèse en microémulsion, ou synthèse hydrothermale.

De manière préférée, les particules d'oxydes de fer sont obtenues par coprécipitation d'ions ferreux et ferriques par une base forte.

Dans la variante, où l'étape de synthèse a) et l'étape de fonctionnalisation b) des particules d'oxydes ou d'oxyhydroxydes sont réalisées simultanément, ladite étape unique a') est réalisée par coprécipitation en milieu alcalin d'ions ferriques et ferreux en présence de dextran.

Enfin la présente invention concerne également l'utilisation du fluide de dépollution moteur dans un moteur à combustion interne de type Diesel, l'injection dudit fluide étant réalisée en amont des systèmes de traitement des gaz d'échappement SCR et FAP, (ou de l'unique système de traitement lorsque ces deux derniers sont regroupés en un seul module), et étant opérée de façon régulière en fonction des conditions de fonctionnement du moteur.

### DESCRIPTION DETAILLEE DE L'INVENTION

L'invention consiste en un fluide multifonctionnel pour la dépollution des gaz d'échappement provenant d'un moteur à combustion interne. Le fluide multifonctionnel selon l'invention favorise soit la régénération en continu du filtre à particules, soit la combustion des suies lors des phases de régénération actives du FAP, soit permet une combinaison de ces deux avantages.

Ce fluide incorpore un additif catalytique de régénération du filtre à particules à une solution aqueuse contenant de l'urée.

Le fluide selon l'invention se présente sous la forme d'une dispersion stable de particules colloïdales métalliques dans la solution aqueuse d'urée.

Par le terme stable, on entend qu'il n'y a pas de séparation de phase au cours du temps.

De façon plus précise, les particules colloïdales ne s'agrègent pas de manière à induire une sédimentation des agrégats produits au cours du temps. La dispersion colloïdale selon la présente invention est donc stable dans le temps.

Plus précisément le fluide pour la dépollution de moteurs thermiques, notamment Diesel, selon l'invention, se présente sous la forme d'une suspension stable comprenant des particules colloïdales d'un ou plusieurs oxydes ou oxyhydroxydes métalliques ou de carbonates métalliques dispersés dans la solution aqueuse d'urée, les métaux des oxydes ou des oxyhydroxydes ou des carbonates métalliques étant choisis dans la liste de métaux suivants : Fe, Cu, Ni, Co, Zn, Mn, Ti, V, Sr, Pt, Ce, Ca, Li, Na, Nb, et préférentiellement dans la sous liste suivante : Fe, Cu, Ce, Sr.

Par particules d'oxydes de fer, on entend plus particulièrement les formes oxydées suivantes étant endendu que cette liste n'est pas limitative :
- L'oxyde de fer se présente sous différentes formes pour lesquelles l'état d'oxydation du fer est différent :
   ▪ Fer II : la wustite FeO,
   ▪ Fer III : l'hématite α-Fe₂O₃, la maghémite γ-Fe₂O₃,
   ▪ Fer II / Fer III : la magnétite Fe₃O₄
- Des oxydes de fer amorphes peuvent également être synthétisés et conviennent pour l'application selon l'invention.
- Les oxyhydroxydes de fer :
   ▪ Fe III : la goethite α-FeO(OH), la lépidocrocite γ-FeO(OH), la feroxyhyte δ-FeO(OH), l'akaganéite β-FeO(OH), la ferrihydrite Fe₅O₈·4H₂O, la bernalite Fe(OH)₃,
   ▪ Fer II : Fe(OH)₂
- Les carbonates de fer :
   ▪ La sidérite FeCO₃
   ▪ L'ankérite Ca(Fe,Mg,Mn)(CO₃)₂
   ▪ La rouille verte carbonatée Fe₆(OH)₁₂CO₃·2H₂O
   ▪ La chukanovite Fe₂(OH)₂CO₃

Dans le cadre de la présente invention, toutes les formes d'oxydes et d'oxyhydroxydes ou de carbonates de fer précédemment citées conviennent, que ces matériaux soient d'origine minérale ou synthétique. De même, des particules de ferrite, un oxyde de fer à structure spinelle de type MFe₂O₄ où M désigne un ion métallique divalent tel que Fe²⁺, Ni²⁺, Co²⁺, conviennent parfaitement pour l'application visée.

La stabilité de dispersions colloïdales est pilotée par les forces qui s'exercent entre particules. Ces forces sont :
∘ les forces de Van der Waals qui sont toujours attractives,
∘ les forces électrostatiques : ces forces existent lorsque les particules colloïdales sont électriquement chargées. Les charges électriques des particules colloïdales peuvent être dues à des substitutions isomorphiques dans la structure cristallographique des particules colloïdales ou être dues à la présence de groupes ionisables à la surface des particules (comme dans le cas des oxydes et oxyhydroxydes ou des carbonates de fer et autres métaux). Ces forces peuvent être répulsives, attractives ou nulles en fonction des conditions physico-chimiques comme le pH de la solution aqueuse, la concentration et la nature des sels en solution.
   Par exemple, dans le cas des oxydes métalliques, en fonction du pH du milieu aqueux, les groupes ionisables à la surface des particules peuvent mener à l'existence de charges positives ou négatives. Il existe un pH auquel les charges électriques (positives et négatives) présentes en surface se compensent : les forces électrostatiques deviennent alors nulles. Dans ce cas précis, la densité de charges électriques étant trop faible, voire nulle, la stabilité des dispersions des particules colloïdales d'oxydes n'est plus assurée s'il n'existe que les forces de Van der Waals.
∘ les forces de répulsion stérique qui sont des forces interparticulaires répulsives. Ces forces existent lorsque des molécules (comme par exemple des molécules de dextran, de polymère de manière générale) ont été greffées ou adsorbées à la surface des particules.

De manière générale, lorsqu'il s'agit de la préparation du fluide de dépollution avec des particules colloïdales d'un matériau présentant un point iso-électrique soit supérieur à 12 soit inférieur à 7, les particules peuvent être directement dispersées dans une solution aqueuse dont le pH est compris entre 9 et 10 et contenant au moins un réducteur ou au moins un précurseur d'agent réducteur des NOx. Dans une variante de l'invention, les particules colloïdales peuvent être directement dispersées dans une solution d'AdBlue®. Il est également possible d'utiliser les voies décrites précédemment pour les oxydes et oxyhydroxydes ou des carbonates de fer (fonctionnalisation par voie organique ou par enrobage d'une couche de silice, ou d'un autre oxyde métallique).

Dans le cas des oxydes de fer tels que l'hématite, la maghémite, le point iso-électrique (noté PIE en abrégé), c'est à dire le pH correspondant à une charge électrique nulle, est compris entre 7 et 8. Pour que les dispersions de particules d'oxydes de fer soient stables vis-à-vis de l'agrégation et de la sédimentation, il faut que les particules soient dispersées dans une solution aqueuse dont le pH est suffisamment éloigné du point iso-électrique de manière que les forces électrostatiques résultantes puissent assurer une bonne dispersion des particules en empêchant une agrégation de ces particules. Ainsi, il est communément admis que, pour avoir des dispersions de particules colloïdales stables, il est nécessaire que le pH soit inférieur au PIE du matériau diminué de 2 unités de pH, ou que le pH soit supérieur au PIE du matériau augmenté de 2 unités de pH.

Dans le cas des dispersions de particules colloïdales d'oxydes de fer mentionnées ci-dessus, il faut donc disperser les particules dans des fluides aqueux de pH soit inférieurs à 5, soit supérieurs à 10.

La présente invention consiste en une dispersion stable des particules colloïdales d'oxydes de fer dans un solvant aqueux dont le pH est compris entre 9 et 10, et plus particulièrement à disperser, par exemple, des particules d'oxydes de fer dans une solution d'AdBlue®. Il est donc nécessaire de trouver un ou des moyen(s) pour éviter une agrégation des particules d'oxydes de fer.

Parmi les solutions permettant d'éviter l'agrégation des particules, on peut fonctionnaliser les particules colloïdales, soit en greffant à leur surface des molécules organiques assurant une répulsion d'origine soit électrostatique, soit stérique, soit électro-stérique entre les particules, soit en les enrobant d'une fine couche d'un matériau dont le point iso-électrique (PIE) est suffisamment éloigné de la zone de pH comprise entre 9 et 10.

La fonctionnalisation des particules colloïdales de fer afin de préparer des suspensions stables dans la gamme de pH visée peut être réalisée de différentes manières :
- On peut dans une première étape synthétiser des particules d'oxydes de fer. Une fois la synthèse réalisée, on fonctionnalise ou on enrobe les particules dans une deuxième étape.
- On peut synthétiser et fonctionnaliser les particules d'oxydes de fer au cours de la même étape.
- On peut préparer des suspensions de particules d'oxydes de fer à partir de poudres que l'on disperse dans des solutions aqueuses dans une gamme de pH pour laquelle les groupes de surface sont ionisés. Dans une deuxième étape, on adsorbe des molécules organiques de manière à générer des répulsions d'origine soit électrostatique, soit stérique, soit électro-stérique entre les particules ou on enrobe les particules d'un matériau comme la silice de telle façon que les particules soient stables pour des pH compris entre 9 et 10.

Dans les options où la préparation des suspensions stables implique une étape de synthèse des particules d'oxydes de fer, il existe différentes voies de synthèses de particules d'oxydes de fer décrites dans la littérature :
- On peut par exemple citer la synthèse des particules d'oxyde de fer selon le procédé Massart :
   ∘ Cette synthèse consiste à coprécipiter du Fer II et du Fer III dans des conditions stœchiométriques, cette coprécipitation ayant lieu en milieu acide. Typiquement, dans 170 mL d'une solution d'acide chlorhydrique à 1,5 M dans laquelle on a dissout 31,41 g de FeCl₂,4H₂O, on ajoute 85,4g de (2FeCl₃,6H₂O). Les particules obtenues sont des agrégats de particules de magnétite (Fe₃O₄). Ces particules de magnétite peuvent être transformées en particules de maghémite (γ-Fe₂O₃) par oxydation. Pour cela, on réalise une décantation sur une plaque magnétique dans une solution d'acide nitrique à 2M. Le floculat cationique de magnétite oxydée en surface est décantée sur une plaque magnétique puis redispersé sous agitation pendant 30 minutes dans une solution de nitrate de fer hydraté à 0,33 M chauffée à 100°C. De cette manière, on obtient des particules de maghémite qui peuvent être soit redispersées en milieu acide (par exemple, une solution d'acide nitrique), soit en milieu basique (par exemple, une solution de potasse).

Les suspensions des particules obtenues par cette synthèse sont stables pour des pH inférieurs à 4 ou pour des pH supérieurs à 10. Pour obtenir des suspensions de telles particules parfaitement stables pour des pH compris entre 7 et 11, il est nécessaire d'adsorber à la surface des particules soit des molécules qui induisent des forces stériques répulsives, soit des molécules qui portent des groupes ionisés à des pH compris entre 7 et 11 générant des forces soit électrostatiques soit électrostériques répulsives. Par exemple, on peut adsorber à la surface des particules de maghémite des molécules de citrate de trisodium dont les pKa sont de 2,8, 4,3 et 5,7. Ainsi, pour des pH supérieurs à 7, les fonctions carboxyliques du citrate de trisodium portent trois charges négatives assurant ainsi une répulsion électrostatique entre les particules de maghémite ce qui évite leur agrégation.
- On peut également réaliser la synthèse des particules d'oxyde de fer directement fonctionnalisées par une macromolécule. Un exemple d'une telle synthèse est celle décrite par Molday et Mackenzie dans un article paru en 1982 (dont la référence complète est : Molday R.S., Mac Kenzie D., Immunospecific ferromagnetic iron-dextran reagents for the labeling and magnetic séparation of cells, J. Immunol. Methods, 1982).
- Ladite synthèse consiste à coprécipiter du chlorure de fer ferrique et du chlorure de fer ferreux (dans un rapport massique de 2,4) dans une solution à 50%m de dextran. Au cours de l'agitation, on ajoute une base comme par exemple une solution d'ammoniaque (de concentration 7,5%v/v), l'ensemble étant chauffé dans une gamme de température de 60 à 65°C. Ce type de synthèse permet l'obtention de particules colloïdales de magnétite stabilisées par les répulsions stériques induites par le dextran adsorbées à la surface des particules.

Parmi les procédés pour obtenir des dispersions stables d'oxydes ou d'oxyhydroxydes ou de carbonates de fer (ou de manière générale, d'oxydes ou d'oxydydroxydes ou de carbonates métalliques) à des pH compris entre 9 et 10, figurent également ceux qui consistent à enrober des particules par une fine couche d'un matériau dont le point iso-électrique est suffisamment éloigné de la zone de pH comprise entre 9 et 10. L'enrobage peut être réalisé par de la silice, de l'or ou un latex.

Selon l'invention, tout type de synthèse de particules d'oxydes de fer ou d'oxyhydroxydes ou de carbonates de fer décrite dans la littérature convient. La synthèse peut inclure une étape de fonctionnalisation des particules d'oxydes de fer ou des oxyhydroxydes ou des carbonates de fer pour que ces particules ne s'agrègent pas, et donc ne sédimentent pas au cours du temps, dans une solution aqueuse dont le pH est compris entre 7 et 11, de préférence entre 8,5 et 10,5.

La fonctionnalisation des particules d'oxydes ou d'oxyhydroxydes ou de carbonates métalliques peut être réalisée après la synthèse ou la redispersion de la poudre des particules en adsorbant différentes molécules. La fonctionnalisation des particules d'oxydes ou d'oxyhydroxydes ou de carbonates métalliques est réalisée en utilisant des molécules organiques de type polymères ioniques portant au moins l'un des groupes chimiques suivants : amine, carboxylate, phosphate, sulfate, sulfonate, ou de type polymères non ioniques : polyoxyéthylènes, sucres, polysaccharides, dextran, amidon.

Selon une autre variante du procédé de fabrication du fluide pour la dépollution moteur selon l'invention, la fonctionnalisation des particules d'oxydes ou d'oxyhydroxydes ou de carbonates métalliques est réalisée en utilisant des molécules organiques choisies dans la liste suivante : acide citrique, citrate de trisodium, acide gluconique, acide dimercaptosuccinique, phosphocholine, sel de sodium de l'acide 4,5-dihydroxy-1,3-benzène disulfonique (Tiron), polysulfobétaïne, poly(méthacrylate de sulfobétaïne), poly(méthacrylamide de sulfobétaïne), dextran, dextran carboxyméthylé, alginate, chitosane, alcool polyvinylique (PVA), polyvinylpyrrolidone, polyéthylène glycol, poly(acide acrylique), polyacrylate de sodium, poly(acide méthacrylique), polyméthacrylate de sodium, polyméthacrylamide, polyacrylamide, ethylcellulose, poly(oxyde d'éthylène), polyéthylèneimine, polycoprolactone.

Selon une autre variante du procédé de fabrication du fluide pour la dépollution moteur selon l'invention, la fonctionnalisation des particules d'oxydes ou d'oxyhydroxydes ou de carbonates métalliques est réalisée en utilisant des molécules de type tensio-actif choisies dans la liste suivante : ammonium quaternaire, hydroxyde de tétraméthylammonium, hydroxyde de tétraéthylammonium, hydroxyde de tétrapropylammonium, bromure de cétyltriméthylammonium, acide oléique, oléate de sodium, glycolipides, sophorolipides, sodium bis(2éthylhexyl) sulfosuccinate.

Les oxydes ou oxyhydroxydes ou carbonates métalliques utilisés dans le fluide selon l'invention peuvent être des particules d'oxyde ou d'oxyhydroxydes ou de carbonates de cérium. Dans ce cas le procédé de fabrication du fluide pour la dépollution moteur consiste en la suite d'étapes suivantes :
- a) synthèse des particules colloïdales d'oxyde ou d'oxyhydroxydes ou de carbonates de cérium,
- b) fonctionnalisation des particules d'oxyde ou d'oxyhydroxydes ou de carbonates de cérium par des molécules organiques pour stabiliser ces particules dans la solution aqueuse contenant au moins un agent réducteur ou au moins un précurseur d'agent réducteur des NOx,
- c) purification des suspensions de particules d'oxyde ou d'oxyhydroxydes ou de carbonates de cérium synthétisées, cette purification est réalisé par au moins l'un des procédés suivants, appliqués seuls ou en combinaison : filtration, ou filtration-lavage, ou rinçage, ou dialyse des suspensions de particules d'oxydes ou d'oxyhydroxydes ou de carbonates de cérium,
- d) dispersion des particules d'oxyde ou d'oxyhydroxydes ou de carbonates de cérium fonctionnalisées dans l'AdBlue® suivant l'un des modes ci-dessous :
   ∘ agitation mécanique à l'aide d'un agitateur équipé soit d'une tige à hélices comprenant un certain nombre de pales, soit de tout autre équipement connu pour assurer une agitation efficace de la suspension,
   ∘ agitation avec un homogénéiseur-disperseur à haut cisaillement (comme, par exemple, un Ultra-Turrax™)
   ∘ agitation avec un broyeur colloïdal
- e) dispersion à l'aide d'une sonde à ultra-sons

L'étape e) est soit réalisée en fonction du résultat et de l'efficacité obtenus à l'issue de l'étape de dispersion mécanique de l'étape d) (dans ce cas cette étape e) est optionnelle) soit réalisée à la place de l'étape d'agitation mécanique de l'étape d).

De façon préférée, l'étape de fonctionnalisation b) des particules d'oxyde ou d'oxyhydroxydes ou de carbonates de cérium est réalisée en utilisant des molécules organiques qui induisent soit des répulsions stériques, soit des répulsions électrostatiques, soit des répulsions électrostériques, ces répulsions empêchant les particules d'oxyde ou d'oxyhydroxydes ou de carbonates de cérium de s'agréger.

De façon également préférée, l'étape de fonctionnalisation b) des particules d'oxyde ou d'oxyhydroxydes ou de carbonates de cérium est réalisée en utilisant des molécules organiques choisies dans la liste suivante : acide citrique, citrate de trisodium, sel de sodium de l'acide 4,5-dihydroxy-1,3-benzène disulfonique (Tiron), polyéthylène glycol, phosphonate de polyéthylène glycol, poly(acide acrylique), polyacrylate de sodium, poly(acide méthacrylique), polyméthacrylate de sodium, polyméthacrylamide, polyacrylamide, poly(oxyde d'éthylène).

L'étape b) de fonctionnalisation des particules d'oxyde ou d'oxyhydroxydes ou de carbonates de cérium peut également être réalisée à partir de molécules de type tensio-actif qui sont choisies dans la liste suivante : ammonium quaternaire, hydroxyde de tétraméthylammonium, hydroxyde de tétraéthylammonium, hydroxyde de tétrapropylammonium, bromure de cétyltriméthylammonium, sodium bis(2éthylhexyl) sulfosuccinate.

Concernant l'étape a) de synthèse, les particules d'oxyde de cérium peuvent être synthétisées suivant la méthode décrite dans la demande de brevet 2 596 380 de Chane-Ching et Le Loarer.

### EXEMPLES SELON L'INVENTION

Les exemples qui suivent montrent différents cas de réalisation du produit selon l'invention et les avantages du produit selon l'invention. Les deux exemples donnés sur le cas des oxydes de fer ne constituent pas une limitation de la présente invention auxdits oxydes de fer.

### Exemple 1 : Dispersion de Fe₃O₄ dans de l'Adblue®

Nous commençons par caractériser la suspension de Fe₃O₄ à 5% m/m stabilisée par du citrate de sodium. L'ajout de citrate de sodium permet d'avoir une suspension stable à pH basique : le pH de la suspension de Fe₃O₄ est égal à 8,1. Pour la mesure de la taille, nous avons dilué une partie de la suspension mère dans une solution basique pour avoir une concentration équivalente en fer de 500 ppm ; le pH de cette suspension diluée est de 9.

La mesure du diamètre des particules a été réalisée par diffusion dynamique de la lumière (DDL). La taille des particules est monomodale et le diamètre moyen des particules de Fe₃O₄ est égal à 45 nm.

Ensuite, nous diluons la suspension de Fe₃O₄ dans un volume d'Adblue® de telle façon que la concentration finale en fer de la suspension soit égale à 350 ppm.

Le pH de la suspension de particules de Fe₃O₄ dans l'Adblue® est égale à 9,5.

La stabilité de la suspension de Fe₃O₄ dans l'Adblue® est vérifiée par une mesure de turbidimétrie de la suspension. La mesure consiste à suivre l'évolution temporelle de la transmission d'un faisceau lumineux à travers une suspension de particules sur toute la hauteur de l'échantillon. Cette mesure est suffisante pour détecter une instabilité d'une suspension colloïdale (par exemple, une sédimentation des particules). Cette mesure est réalisée à l'aide d'un appareil commercial nommé Turbiscan®. Lorsque cette mesure est réalisée sur la suspension de particules de Fe₃O₄ dispersées dans l'Adblue®, on constate que le profil de l'intensité transmise à travers le tube en verre contenant la suspension est plat : la valeur de l'intensité lumineuse transmise est constante sur toute la hauteur du tube ce qui indique qu'il n'y a pas eu de sédimentation au cours de cette période.

La taille des particules de Fe₃O₄ dispersée dans l'Adblue® est mesurée par DDL.

La distribution des particules de Fe₃O₄ dans l'Adblue® est toujours monomodale.

Le diamètre moyen est de 53,5 nm. On constate que les particules de Fe₃O₄ restent de tailles nanométriques et ne peuvent donc pas sédimenter. Cette observation est en accord avec la mesure réalisée au Turbiscan qui montre une stabilité de la suspension. Cet exemple démontre qu'il est possible de disperser dans l'Adblue® des particules d'oxydes de fer (Fe₃O₄) et d'obtenir une suspension stable dans le temps.

### Exemple 2 : Dispersion de Fe₂O₃ dans une solution d'Adblue®

Nous caractérisons la suspension de Fe₂O₃ à 3% m/m stabilisée par du citrate de sodium : l'ajout de citrate de sodium permettant d'avoir une suspension stable à pH basique.

Le pH de la suspension de Fe₂O₃ est égal à 8,4.

Pour la mesure de la taille, nous diluons une partie de la suspension mère dans une solution basique pour avoir une concentration équivalente en fer de 500 ppm ; le pH de cette suspension diluée est de 8,7. La mesure du diamètre des particules est réalisée par diffusion dynamique de la lumière (DDL). La taille des particules est monomodale et le diamètre moyen des particules de Fe₂O₃ est égal à 53 nanomètres.

Ensuite, nous diluons la suspension de Fe₂O₃ dans un volume d'Adblue® de telle façon que la concentration finale en fer de la suspension soit égale à 350 ppm. Le pH de la suspension dans l'Adblue® est égale à 9.

La taille des particules de Fe₂O₃ dispersée dans l'Adblue® a été mesurée par DDL.

La distribution des particules de Fe₂O₃ dans l'Adblue® reste monomodale. Le diamètre moyen est de 78 nm. On constate que les particules de Fe₂O₃ dispersées dans l'Adblue® restent de taille nanométrique et ne peuvent donc pas sédimenter. Cet exemple démontre qu'il est possible de disperser dans l'Adblue® des particules d'oxydes de fer (Fe₂O₃) et d'obtenir une suspension stable.

## Revendications

1. Procédé de fabrication d'un fluide pour la dépollution de moteurs thermiques, notamment Diesel, permettant d'effectuer à la fois la réduction catalytique sélective des oxydes d'azote contenus dans les gaz d'échappement, ainsi que l'aide à la régénération du filtre à particules par combustion catalytique des particules de suies déposées dans le filtre à particules (fonction dite d'aide à la régénération du FAP), ledit fluide se présentant sous la forme d'une suspension stable comprenant des particules colloïdales d'un ou plusieurs oxydes ou oxyhydroxydes métalliques ou de carbonates métalliques dispersés dans une solution d'urée à 32,5% massique dans de l'eau pure, les métaux des oxydes ou des oxyhydroxydes ou des carbonates métalliques étant choisis dans la liste de métaux suivants : Fe, Cu, Ni, Co, Zn, Mn, Ti, V, Sr, Pt, Ce, Ca, Li, Na, Nb et préférentiellement dans la sous liste suivante : Fe, Cu, Ce, Sr, ledit procédé consistant en la suite d'étapes suivantes :
• a) synthèse des particules d'oxydes ou d'oxyhydroxydes ou de carbonates métalliques,
• b) fonctionnalisation des particules d'oxydes ou d'oxyhydroxydes ou de carbonates métalliques par des molécules organiques ou par enrobage pour stabiliser ces particules dans la solution aqueuse d'urée,
• c) purification par filtration, ou filtration-lavage, ou rinçage, ou dialyse, procédés appliqués seuls ou en combinaison, des suspensions de particules d'oxydes ou d'oxyhydroxydes ou de carbonates métalliques,
• d) dispersion des particules d'oxydes ou d'oxyhydroxydes ou de carbonates métalliques fonctionnalisées dans ladite solution aqueuse d'urée suivant l'un des modes ci-dessous :
∘ agitation mécanique à l'aide d'un agitateur équipé soit d'une tige à hélices comprenant un certain nombre de pales, soit de tout autre équipement connu pour assurer une agitation efficace de la suspension,
∘ agitation avec un homogénéiseur-disperseur à haut cisaillement
∘ agitation avec un broyeur colloïdal
• e) dispersion à l'aide d'une sonde à ultra-sons, l'étape e) étant soit réalisée en fonction du résultat et de l'efficacité obtenus à l'issue de l'étape de dispersion mécanique de l'étape d) (dans ce cas cette étape e) est optionnelle), soit réalisée à la place de l'étape d'agitation mécanique de l'étape d).

2. Procédé de fabrication du fluide pour la dépollution moteur selon la revendication 1, dans lequel l'étape b) de fonctionnalisation des particules d'oxydes ou d'oxyhydroxydes ou de carbonates métalliques est réalisée en utilisant des molécules organiques de type polymères ioniques portant au moins l'un des groupes chimiques suivants : amine, carboxylate, phosphate, sulfate, sulfonate, ou de type polymères non ioniques : polyoxyéthylènes, sucres, polysaccharides, dextran, amidon.

3. Procédé de fabrication du fluide pour la dépollution moteur selon la revendication 1, dans lequel l'étape b) de fonctionnalisation des particules d'oxydes ou d'oxyhydroxydes ou de carbonates métalliques est réalisée en utilisant des molécules organiques choisies dans la liste suivante : acide citrique, citrate de trisodium, acide gluconique, acide dimercaptosuccinique, phosphocholine, sel de sodium de l'acide 4,5-dihydroxy-1,3-benzène disulfonique (Tiron), polysulfobétaïne, poly(méthacrylate de sulfobétaïne), poly(méthacrylamide de sulfobétaïne), dextran, dextran carboxyméthylé, alginate, chitosane, alcool polyvinylique (PVA), polyvinylpyrrolidone, polyéthylène glycol, poly(acide acrylique), polyacrylate de sodium, poly(acide méthacrylique), polyméthacrylate de sodium, polyméthacrylamide, polyacrylamide, ethylcellulose, poly(oxyde d'éthylène), polyéthylèneimine, polycoprolactone.

4. Procédé de fabrication du fluide pour la dépollution moteur selon la revendication 1, dans lequel l'étape b) de fonctionnalisation des particules d'oxydes ou d'oxyhydroxydes ou de carbonates métalliques est réalisée en utilisant des molécules de type tensio-actif choisies dans la liste suivante : ammonium quaternaire, hydroxyde de tétraméthylammonium, hydroxyde de tétraéthylammonium, hydroxyde de tétrapropylammonium, bromure de cétyltriméthylammonium, acide oléique, oléate de sodium, glycolipides, sophorolipides, sodium bis(2éthylhexyl) sulfosuccinate.

5. Procédé de fabrication du fluide pour la dépollution moteur selon la revendication 1, dans lequel les étapes a) de synthèse des particules d'oxydes ou d'oxyhydroxydes ou de carbonates métalliques, et b) de fonctionnalisation des particules d'oxydes ou d'oxyhydroxydes ou de carbonates métalliques sont réalisées simultanément.

6. Procédé de fabrication du fluide pour la dépollution moteur selon la revendication 1, dans lequel l'étape b) de fonctionnalisation des particules d'oxydes ou d'oxyhydroxydes ou de carbonates métalliques est réalisé par enrobage, c'est-à-dire par dépôt d'une fine couche d'un matériau dont le point iso-électrique (PIE) est soit supérieur à 10,5 soit inférieur à 8, et préférentiellement soit supérieur à 12, soit inférieur à 7.

7. Procédé de fabrication du fluide pour la dépollution moteur selon la revendication 6, dans lequel, lorsque les particules colloïdales sont des particules d'oxydes ou d'oxyhydroxydes ou de carbonates de fer, l'étape de fonctionnalisation b) est réalisée par enrobage desdites particules d'oxydes ou d'oxyhydroxydes ou de carbonates de fer par une fine couche de silice, ou une fine couche de gadolinium, ou une fine couche d'or, ou de tout autre oxyde métallique dont le PIE est soit supérieur à 10,5 soit inférieur à 8, et préférentiellement soit supérieur à 12 soit inférieur à 7.

8. Procédé de fabrication d'un fluide selon l'une des revendications précédentes dans lequel les particules colloïdales sont des oxydes de fer choisis dans la liste suivante, pris seuls ou en mélange : la wustite FeO, l'hématite α-Fe₂O₃, la maghémite γ-Fe₂O₃, la magnétite ou des oxyhydroxydes de fer pris seul ou en mélange, choisis dans la liste suivante : la goethite α-FeO(OH), la lépidocrocite γ-FeO(OH), la feroxyhyte δ-FeO(OH), l'akaganéite β-FeO(OH), la ferrihydrite Fe₅O₈·4H₂O, la bernalite Fe(OH)₃, l'hydroxyde ferreux Fe(OH)₂.

9. Fluide pour la dépollution de moteurs thermiques, notamment Diesel, permettant d'effectuer à la fois la réduction catalytique sélective des oxydes d'azote contenus dans les gaz d'échappement, ainsi que l'aide à la régénération du filtre à particules par combustion catalytique des particules de suies déposées dans le filtre à particules (fonction dite d'aide à la régénération du FAP), obtenu par le procédé selon l'une des revendications 1 à 8.

10. Utilisation du fluide selon la revendication 9 ou obtenu par le procédé de fabrication selon l'une des revendications 1 à 8, dans un moteur à combustion interne de type Diesel, l'injection dudit fluide étant réalisée en amont des systèmes de traitement des gaz d'échappement SCR et FAP, et étant opérée de façon régulière dépendant des conditions de fonctionnement du moteur thermique.

## Patentansprüche

1. Verfahren zur Herstellung eines Fluids zur Entgiftung von Wärmekraftmaschinen, insbesondere Dieselmotoren, zur gleichzeitigen Durchführung der selektiven katalytischen Reduktion der in den Abgasen enthaltenen Stickstoffoxide und der Regeneration des Partikelfilters durch katalytische Verbrennung von in dem Partikelfilter abgeschiedenen Rußpartikeln (als Unterstützung der Regeneration von PF bezeichnete Funktion), wobei das Fluid in Form einer stabilen wässrigen Suspension vorliegt, die kolloidale Teilchen eines oder mehrerer Metalloxide oder -oxidhydroxide oder Metallcarbonate umfasst, die in einer 32,5 gew.-%igen Lösung von Harnstoff in reinem Wasser dispergiert sind, wobei die Metalloxide oder -oxidhydroxide oder Metallcarbonate aus der folgenden Liste von Metallen: Fe, Cu, Ni, Co, Zn, Mn, Ti, V, Sr, Pt, Ce, Ca, Li, Na, Nb und vorzugsweise aus der folgenden Unterliste: Fe, Cu, Ce, Sr ausgewählt sind, wobei das Verfahren aus der Abfolge der folgenden Schritte besteht:
• a) Synthese von Teilchen von Metalloxiden oder -oxidhydroxiden oder -carbonaten,
• b) Funktionalisierung der Teilchen von Metalloxiden oder -oxidhydroxiden oder - carbonaten mit organischen Molekülen oder durch Beschichten zur Stabilisierung dieser Teilchen in der wässrigen Harnstofflösung,
• c) Reinigung der Suspensionen von Teilchen von Metalloxiden oder -oxidhydroxiden oder -carbonaten durch Filtration oder Filtration-Wäsche oder Spülen oder Dialyse, wobei die Verfahren alleine oder in Kombination verwendet werden,
• d) Dispergieren der funktionalisierten Teilchen von Metalloxiden oder -oxidhydroxiden oder -carbonaten in der wässrigen Harnstofflösung gemäß einer der folgenden Verfahrensweisen :
∘ mechanisches Mischen mit Hilfe eines Mischers mit einer Propellerwelle mit einer bestimmten Zahl von Flügeln oder einer beliebigen anderen Vorrichtung, die bekanntlich ein effektives Mischen der Suspensionen gewährleistet,
∘ Mischen mit einem hochscherenden Homogenisator-Dispergierer,
∘ Mischen mit einer Kolloidmühle,
• e) Dispergieren mit Hilfe einer Ultraschallsonde, wobei Schritt e) entweder in Abhängigkeit vom Ergebnis und der Effizienz, die am Ende des Schritts des mechanischen Dispergierens von Schritt d) erhalten wurden, durchgeführt wird (in diesem Fall ist Schritt e) fakultativ) oder anstelle des Schritts des mechanischen Dispergierens von Schritt d) durchgeführt wird.

2. Verfahren zur Herstellung eines Fluids zur Motorentgiftung nach Anspruch 1, wobei Schritt b) der Funktionalisierung der Teilchen von Metalloxiden oder -oxidhydroxiden oder -carbonaten unter Verwendung von organischen Molekülen vom Typ ionischer Polymere, die mindestens eine der folgenden chemischen Gruppen tragen: Amin, Carboxylat, Phosphat, Sulfat, Sulfonat, oder vom Typ nichtionischer Polymere: Polyoxyethylene, Zucker, Polysaccharide, Dextranen, Stärke, durchgeführt wird.

3. Verfahren zur Herstellung eines Fluids zur Motorentgiftung nach Anspruch 1, wobei Schritt b) der Funktionalisierung der Teilchen von Metalloxiden oder -oxidhydroxiden oder -carbonaten unter Verwendung von organischen Molekülen durchgeführt wird, die aus der folgenden Liste ausgewählt werden: Citronensäure, Trinatriumcitrat, Gluconsäure, Dimercaptobernsteinsäure, Phosphor chinolin, 4,5-Dihydroxy-1,3-benzoldisulfonsäure-Natriumsalz (Tiron), Polysulfobetain, Poly(sulfobetainmethacrylat), Poly(sulfobetainmethacrylamid), Dextran, Carboxymethyldextran, Alginat, Chitosan, Polyvinylalkohol (PVA), Polyvinylpyrrolidon, Polyethylenglykol, Polyacrylsäure, Natriumpolyacrylat, Polymethacrylsäure, Natriumpolymethacrylat, Polymethacrylamid, Polyacrylamid, Ethylcellulose, Polyethylenoxid, Polyethylenimin, Polycaprolacton.

4. Verfahren zur Herstellung eines Fluids zur Motorentgiftung nach Anspruch 1, wobei Schritt b) der Funktionalisierung der Teilchen von Metalloxiden oder -oxidhydroxiden oder -carbonaten unter Verwendung von Molekülen vom Tensid-Typ durchgeführt wird, die aus der folgenden Liste ausgewählt werden: quartärem Ammonium, Tetramethylammoniumhydroxid, Tetraethylammoniumhydroxid, Tetrapropylammoniumhydroxid, Cetyltrimethylammoniumbromid, Ölsäure, Natriumoleat, Glykolipiden, Sophorolipiden, Natriumbis(2-ethylhexyl)sulfosuccinat.

5. Verfahren zur Herstellung eines Fluids zur Motorentgiftung nach Anspruch 1, wobei die Schritte a) der Synthese der Teilchen von Metalloxiden oder -oxidhydroxiden oder - carbonaten und b) der Funktionalisierung der Teilchen von Metalloxiden oder - oxidhydroxiden oder -carbonaten gleichzeitig durchgeführt werden.

6. Verfahren zur Herstellung eines Fluids zur Motorentgiftung nach Anspruch 1, wobei der Schritt b) der Funktionalisierung der Teilchen von Metalloxiden oder -oxidhydroxiden oder -carbonaten durch Beschichten durchgeführt wird, d. h. durch Abscheiden einer dünnen Schicht eines Materials mit einem isoelektrischen Punkt (IEP) entweder über 10,5 oder unter 8 und vorzugsweise entweder über 12 oder unter 7 liegt.

7. Verfahren zur Herstellung eines Fluids zur Motorentgiftung nach Anspruch 6, wobei dann, wenn es sich bei den kolloidalen Teilchen um Teilchen von Eisenoxiden oder - oxidhydroxiden oder -carbonaten handelt, der Schritt der Funktionalisierung b) durch Beschichten der Teilchen von Eisenoxiden oder -oxidhydroxiden oder -carbonaten mit einer dünnen Siliciumdioxidschicht oder einer dünnen Gadoliniumschicht oder einer dünnen Goldschicht oder einem beliebigen anderen Metalloxid, dessen IEP entweder über 10,5 oder unter 8 und vorzugsweise entweder über 12 oder unter 7 liegt, durchgeführt wird.

8. Verfahren zur Herstellung eines Fluids nach einem der vorhergehenden Ansprüche, wobei es sich bei den kolloidalen Teilchen um Eisenoxide, die alleine oder als Mischung aus der folgenden Liste ausgewählt sind: Wüstit FeO, Hämatit α-Fe₂O₃, Maghemit γ-Fe₂O₃, Magnetit, oder Eisenoxidhydroxide, die alleine oder als Mischung aus der folgenden Liste ausgewählt sind: Goethit α-FeO(OH), Lepidokrokit γ-FeO(OH), Feroxyhyt δ-FeO(OH), Akaganeit β-FeO(OH), Ferrihydrit Fe₅O₈.4H₂O, Bernalit Fe(OH)₃ und Eisen(II)-hydroxid Fe(OH)₂, handelt.

9. Fluid zur Entgiftung von Wärmekraftmaschinen, insbesondere Dieselmotoren, zur gleichzeitigen Durchführung der selektiven katalytischen Reduktion der in den Abgasen enthaltenen Stickstoffoxide und der Regeneration des Partikelfilters durch katalytische Verbrennung von in dem Partikelfilter abgeschiedenen Rußpartikeln (als Unterstützung der Regeneration von PF bezeichnete Funktion), erhalten durch das Verfahren nach einem der Ansprüche 1 bis 8.

10. Verwendung des Fluids nach Anspruch 9 oder des durch das Herstellungsverfahren nach einem der Ansprüche 1 bis 8 erhaltenen Fluids in einem Verbrennungsmotor vom Diesel-Typ, wobei die Einspritzung des Fluids stromaufwärts der SCR- und PF-Abgasbehandlungssysteme durchgeführt und in Abhängigkeit von den Betriebsbedingungen der Wärmekraftmaschine regelmäßig betrieben wird.

## Claims

1. Process for producing a fluid for the decontamination of heat engines, in particular diesel engines, which makes it possible to simultaneously carry out selective catalytic reduction of the nitrogen oxides present in the exhaust gases and also assistance in the regeneration of the particle filter by catalytic combustion of the soot particles deposited in the particle filter ("assistance in the regeneration of the PF" function), said fluid being provided in the form of a stable suspension comprising colloidal particles of one or more metal oxides or oxide/hydroxides or of metal carbonates dispersed in a solution of urea at 32.5% by weight in pure water, the metals of the metal oxides or oxide/hydroxide or carbonates being chosen from the list of following metals: Fe, Cu, Ni, Co, Zn, Mn, Ti, V, Sr, Pt, Ce, Ca, Li, Na and Nb, and preferentially from the following list: Fe, Cu, Ce and Sr, said process consisting of the sequence of following steps:
• a) synthesis of the particles of metal oxides or oxide/hydroxides or carbonates,
• b) functionalization of the particles of metal oxides or oxide/hydroxides or carbonates with organic molecules or by coating in order to stabilise these particles in the aqueous solution of urea,
• c) purification by filtration, or filtration/washing, or rinsing, or dialysis, which processes are applied alone or in combination, of the suspensions of particles of metal oxides or oxide/hydroxides or carbonates,
• d) dispersion of the functionalized particles of metal oxides or oxide/hydroxides or carbonates in said aqueous solution of urea, according to one of the methods below:
∘ mechanical stirring using a stirrer equipped either with a propeller shaft comprising a certain number of blades or with any other item of equipment known to provide efficient stirring of the suspension,
∘ stirring with a high-shear homogenizer-disperser,
∘ stirring with a colloid mill,
• e) dispersion using an ultrasound probe, step e) being either carried out as a function of the result and of the effectiveness which are obtained on conclusion of the step of mechanical dispersion of step d) (in this case, this step e) is optional), or carried out in place of the step of mechanical stirring of step d).

2. Process for producing the fluid for engine decontamination according to Claim 1, in which step b) of functionalization of the particles of metal oxides or oxide/hydroxides or carbonates is carried out using organic molecules of ionic polymer type carrying out at least one of the following chemical groups: amine, carboxylate, phosphate, sulfate, sulfonate, or of non-ionic polymer type: polyethylenes, sugars, polysaccharides, dextran, starch.

3. Process for producing the fluid for engine decontamination according to Claim 1, in which step b) of functionalization of the particles of metal oxides or oxide-hydroxides or carbonates is carried out using organic molecules chosen from the following list: citric acid, trisodium citrate, gluconic acid, dimercaptosuccinic acid, phosphocholine, sodium salt of 4,5-dihydroxy-1,3-benzenesulfonic acid (Tiron), polysulfobetaine, poly(sulfobetaine methacrylate), poly(sulfobetaine methacrylamide), dextran, carboxylated dextran, alginate, chitosan, polyvinyl alcohol (PVA), polyvinylpyrrolidone, polyethylene glycol, poly(acrylic acid), sodium polyacrylate, poly(methacrylic acid), sodium polymethacrylate, polymethacrylamide, polyacrylamide, ethylcellulose, poly(ethylene oxide), polyethyleneimine or polycaprolactone.

4. Process for producing the fluid for engine decontamination according to Claim 1, in which step b) of functionalization of the particles of metal oxides or oxide/hydroxides or carbonates is carried out using molecules of surfactant type chosen from the following list: quaternary ammonium, trimethylammonium hydroxide, triethylammonium hydroxide, tetrapolyammonium hydroxide, cetyltrimethylammonium bromide, oleic acid, sodium oleate, glycolipids, sophorolipids or sodium bis(2-ethylhexyl) sulfosuccinate.

5. Process for producing the fluid for engine decontamination according to Claim 1, in which steps a) of synthesis of the particles of the metal oxides or oxide/hydroxides or carbonates and b) of functionalization of the particles of metal oxides or oxide/hydroxides or carbonates are carried out simultaneously.

6. Process for producing the fluid for engine decontamination according to Claim 1, in which step b) of functionalization of the particles of metal oxides or oxide/hydroxides or carbonates is carried out by coating, that is to say be deposition of a thin layer of a material, the isoelectric point (IEP) of which is either greater than 10.5 or less than 8, and preferentially either greater than 12 or less than 7.

7. Process for producing the fluid for engine decontamination according to Claim 6, in which, when the colloidal particles are particles of iron oxides or oxide/hydroxides or carbonates, the functionalization step b) is carried out by coating said particles of iron oxides or oxide/hydroxides or carbonates with a thin layer of silica, or a thin layer of gadolinium, or a thin layer of gold, or of any other metal oxide, the IEP of which is either greater than 10.5 or less than 8, and preferentially either greater than 12 or less than 7.

8. Process for producing a fluid according to one of the preceding claims, in which the colloidal particles are iron oxides chosen from the following list, taken alone or as a mixture: wustite FeO, hematite α-Fe₂O₃, maghemite γ-Fe₂O₃ or magnetite, or iron oxide/hydroxides, taken alone or as a mixture, chosen from the following list: goethite α-FeO(OH), lepidorcrocite γ-FeO(OH), feroxyhyte δ-FeO(OH), akageneite β-FeO(OH), ferrihydrite Fe₅O₈·4H₂O, bernalite Fe(OH)₃ or ferrous hydroxide Fe(OH)₂.

9. Fluid for the decontamination of heat engines, in particular diesel engines, which makes it possible to simultaneously carry out selective catalytic reduction of the nitrogen oxides present in the exhaust gases and also assistance in the regeneration of the particle filter by catalytic combustion of the soot particles deposited in the particle filter ("assistance in the regeneration of the PF function), obtained by means of the process according to one of Claims 1 to 8.

10. Use of the fluid according to Claim 9 or obtained by means of the production process according to one of Claims 1 to 8, in an internal combustion engine of diesel type, the injection of said fluid being carried out upstream of the SCR and PF exhaust gas treatment systems, and being carried out regularly depending on the operating conditions of the heat engine.
